# EUROPEAN PATENT SPECIFICATION

(11) **EP 1 384 062 B1**
(45) Date of publication and mention of the grant of the patent: **11.04.2007**
(21) Application number: 02750856.3
(22) Date of filing: 04.04.2002
(51) Int. Cl.: G01N 21/31, G01N 21/47, G01N 21/59

(54) **OPTICAL PROPERTY DETERMINATION USING DIFFERENCES IN SIGNAL RESPONSES TO APPLIED MODULATED LASER SIGNALS**
BESTIMMUNG OPTISCHER EIGENSCHAFTEN UNTER NUTZUNG DER SIGNALDIFFERENZEN HERVORGERUFEN DURCH DIE MODULIERTEN LASER-SIGNALE
DETERMINATION DE PROPRIETES OPTIQUES A PARTIR DES DIFFERENCES DE REPONSE A DES SIGNAUX LASER MODULES APPLIQUES

(30) Priority: 05.04.2001 EP 01108644
(43) Date of publication of application: 28.01.2004
(73) Proprietor: Agilent Technologies, Inc., Santa Clara, CA 95051 (US)
(72) Inventor: BELLER, Josef, 72074 Tuebingen (DE); PEERLINGS, Joachim, 71034 Böblingen (DE)
(74) Representative: Barth, Daniel Mathias
(86) International application number: PCT/EP2002/003722
(87) International publication number: WO 2002/090944

(56) References cited:
- EP-A- 0 280 328
- EP-A- 0 663 591
- US-A- 5 187 672
- US-A- 5 447 159
- US-A- 5 564 417
- US-A- 6 043 506

## Description

The present invention relates to the measurement of optical properties such as chromatic dispersion.

A standard way for measuring chromatic dispersion (CD) is the so-called modulation phase-shift method as described e.g. on pages 482ff in 'Fiber Optic Test and Measurement' by Dennis Derickson, ISBN 0-13-534330-5, 1998. This method, however, is not suitable for in situ measurements of fiber paths.

US 5,447,159 discloses a system for optically imaging a specimen, wherein a plurality of modulated optical signals at different optical frequencies are passed through the specimen and corresponding response signals received from the specimen are analyzed with respect to an additionally transmitted phase reference.

US 6,043,506 discloses of measuring quantities of biological or other types of samples. Therefore, excitation light at different wavelengths is transferred from a source module to the sample and emitted or scattered light is transferred back to each a detector of a detection module.

US 5,187,672 discloses a phase modulated spectroscopy wherein a plurality of modulated optical signals at different optical frequencies are passed to a subject and corresponding response signals are analyzed with respect to a reference signal.

EP 0 663 591 A1 discloses a determination of various tissue materials by using a plurality of amplitude modulated light sources positioned at different distances from a sensor. From sets of data from each individual light source, corresponding curves might be constructed.

US 5,564,417 discloses a spectrophotometer for tissue examination comprising a light source for generating light at a selected wavelength, a detector for detecting light that has migrated in the tissue, and a phase detector for measuring a phase shift between the introduced and the detected light.

EP 0 280 328 discloses a chromatic dispersion measurement system for optical fibers comprising a light signal transmitter for generating modulated optical signals and a light signal receiver. The light signal receiver comprises a first detector for detecting a reference optical signal and a second detector for detecting a measurement optical signal and a phase discrimination circuit to measure a phase difference there between.

### SUMMARY OF THE INVENTION

It is an object of the invention to provide an improved measurement of an optical property of an optical device under test, such as chromatic dispersion. The object is solved by the independent claims. Preferred embodiments are shown by the dependent claims.

According to the present invention, the characteristic of an optical property (preferably chromatic dispersion CD or group delay GD) of a device under test (DUT) is determined by applying a first and a second laser signal to the DUT. The first laser signal is provided at a first center wavelength and intensity modulated by a first modulation frequency. The second laser signal is provided at a second center wavelength and intensity modulated by a second modulation frequency. Response signals from the DUT on the applied first and second laser signals are received by a receiving unit and further provided to a processing unit for determining therefrom the characteristic of the optical property of the DUT.

Whereas the aforementioned modulation phase-shift method requires to provide both the reference signal applied to the stimulus signal and the response signal of the DUT on the stimulus signal, the invention avoids this necessity to provide the reference signal for evaluation. Instead, the invention determines the characteristic of the DUT optical property from differences in response signals on different applied stimulus signals. The invention thus does not require an additional reference transmission path for supplying the reference signal for evaluation. This is in particular of advantage in fiber path systems (e.g. over hundreds of kilometers length), where otherwise such additional reference transmission path would have been necessary. Thus, 'in-situ' measurements even over long distances and without requiring such additional paths solely for measuring purposes are rendered possible.

In operation, for determining the characteristic of the optical property of the DUT, at least one of the parameters, first center wavelength, first modulation frequency, second center wavelength, or second modulation frequency, is varied. For each variation, the processing unit determines a value of the optical property of the DUT based on differences in signal phases of the response signals.

In case the modulation frequency is equal for the first and second laser signals; differences in the center wavelengths lead to phase differences between the response signals on the first and second laser signals. E.g. CD or GD can then be determined from those phase differences. Lower modulation frequencies can be applied for reducing ambiguities in the interpretation of the phase differences, while higher modulation frequencies can be applied for increasing resolution. A variation in the modulation frequency, however equal for both laser signals, can thus improve accuracy of the measurement results.

The first and second laser signals can be applied concurrency or sequentially, and that the response signals on the first and second laser signals can thus be detected either in common (as superimposed signals) or as individual signals. In the former case, the phase differences have to be derived from the superimposed response signals, and signal separation might be provided to derive the individual response signals from the superimposed response signals. In the latter case, the first and second laser signals can be e.g. temporally displaced (e.g. one is switched on while the other is switched off), and a phase jump between the two response signals will be detected. Alternatively, the phase of the switched off or displaced response signal is maintained as reference phase for evaluating the differences in signal phases of the response signals. This can be done e.g. by emulating, sampling, synthesizing, or otherwise generating the reference phase while the actual response signal is still on and maintaining this generated reference phase at least until a next response signal on a next applied laser signal appears (and can be sufficiently detected for the phase comparison). One preferred way to generate the reference phase is by synchronizing a reference oscillator e.g. using Phase Locked Loop (PLL) circuits.

For determining chromatic dispersion (CD) or group delay (GD) as optical property of the DUT, the processing unit preferably applies the principles of the aforementioned modulation phase-shift method for evaluating the differences in signal phases of the response signals. The teaching of the aforementioned book by Dennis Derickson with respect to evaluating differences in signal phases of response signals according to the modulation phase-shift method shall be incorporated herein by reference. However other known algorithms and methods for evaluating signal phase differences can be applied accordingly.

In order to evaluate the response signals, the processing unit needs to know for each measurement the present settings (e.g. the values) of the parameters: first center wavelength, first modulation frequency, second center wavelength, and second modulation frequency. Using that knowledge or information of the present parameter settings together with the determined response signal for the parameter settings allows the processing unit to determine the characteristic of the optical property of the DUT by comparing with the determined response signal for different parameter settings.

In one embodiment, the processing unit receives the current parameter settings applied for the generation of the first and second laser signals, e.g. from the laser source(s) for generating the first and second laser signals or a control unit therefore. This can be done wired or wireless, whereby it will be appreciated that standard electronic communication paths will generally be sufficient for the transmission of the present parameter settings. It is also possible to modulate the laser signals with the encoded measurement parameters and transmit this information through the DUT to a receiver of the processing unit.

In another embodiment, the processing unit already has knowledge of the present parameter settings. This can be accomplished by following predefined measurement protocols with a defined sequence in a variation of the parameter settings. Start procedures for initiating and synchronizing a defined measurement protocol, both for the signal generation and signal evaluation, can be applied as well known in the art.

In another embodiment, the processing unit will determine the present parameter settings. This can be accomplished by providing adequate measuring sensors or devices (e.g. for measuring wavelengths and/or modulation frequencies) with the processing unit.

It goes without saying that the invention is not limited to only two different laser signals but that a plurality of different laser signals can be applied in accordance with the above said. Thus, the optical property/properties can be determined with higher accuracy and/or over a wider range.

It is clear that the invention can be partly or entirely embodied or supported by one or more suitable software programs, which can be stored on or otherwise provided by any kind of data carrier, and which might be executed in or by any suitable data processing unit.

### BRIEF DESCRIPTION OF THE DRAWINGS

Other objects and many of the attendant advantages of the present invention will be readily appreciated and become better understood by reference to the following detailed description when considering in connection with the accompanied drawing.

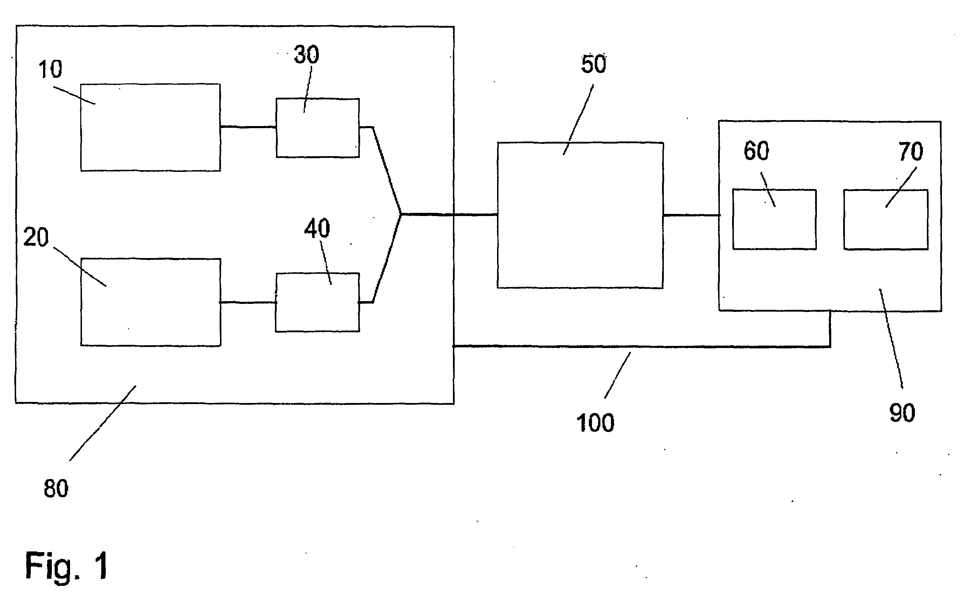

- Fig. 1: shows a preferred embodiment of a chromatic dispersion test setup according to the present invention.

### DETAILED DESCRIPTION OF THE INVENTION

In Fig. 1, two laser sources 10 and 20, e.g. fixed or tunable in wavelength, are each externally modulated by modulators 30 and 40, and provide a stimulus signal to a device under test (DUT) 50. A receiver 60 receives response signals on the stimulus signals from the DUT 50 and provides those to a processing unit 70.

The two laser sources 10 and 20 together with the modulators 30 and 40 belong to a signal generation unit 80, while the receiver 60 together with the processing unit 70 belong to a signal evaluation unit 90. Communication between the signal generation unit 80 and the signal evaluation unit 90 might be provided by a link 100, which can be a wired or wireless link e.g. through a data network. It is to be understood that the type of the link 100 can depend on the specific application, in particular on the type of DUT 50. In case of a fiber path over long(er) distances as DUT 50, the link 100 might be a LAN connection or a wireless connection as known in the art.

In operation, the two laser sources 10 and 20 are set to different wavelengths and are modulated with frequencies preferably between 1 and 10 GHz. The receiver 60 measures the signal responses of the DUT 50 on the two applied laser signals. The chromatic dispersion of the DUT 50 is determined from the different signal phases. Preferably, the aforementioned known modulation phase shift method is applied.

For each measurement of the DUT 50, the signal generation unit 80 provides to the signal evaluation unit 90 through the link 100 the present settings of the parameters for the center wavelength(s) and the modulation frequency(ies) of the laser signals provided by the two laser sources 10 and 20. As an alternative, the signal generation unit 80 encodes and adds the present settings of the parameters for the center wavelength(s) and the modulation frequency(ies) of the laser signals to the modulation signal for the modulators 30 and 40, thus eliminating the need for the separate connection 100 between signal generation unit 80 and signal evaluation unit 90. A phase difference between the modulation signals of the first and second laser wavelengths can be determined e.g. either from a phase jump which occurs with every change between first and second wavelength, or by providing a synchronized phase reference signal, which can be derived from the first or second modulation frequency by taking advantage of a sample and hold phase-lock-loop (PLL) circuit.

The measurement process may also take place in a pre-defined sequence, with pre-programmed settings for laser wavelengths and modulation frequencies. Start, trigger and stop codes define the run off and the extent of the measurement. With this approach the connection 100 between signal generation 80 and signal evaluation 90 is rendered unnecessary too.

## Claims

1. A system (80, 90) for determining a characteristic of an optical property of a device under test - DUT - (50), wherein the optical property is at least one of a group comprising chromatic dispersion and group delay, the system comprising:
a signal evaluation unit (90) adapted for receiving response signals of the DUT (50) on an applied first laser signal at a first center wavelength modulated by a first modulation frequency and an applied second laser signal at a second center wavelength modulated by a second modulation frequency,
whereby
the signal evaluation unit (90) is adapted for:
serially receiving the response signals, whereof one applied signal is switched on while the other applied signal is switched off, and
determining the characteristic of the optical property of the DUT (50) based on an analysis of the serially received response signals by determining a phase jump between said response signals, only in conjunction with the parameter settings for the first center wavelength, the first modulation frequency, the second center wavelength, and the second modulation frequency.

2. A system (80, 90) for determining a characteristic of an optical property of a device under test - DUT - (50), wherein the optical property is at least one of a group comprising chromatic dispersion and group delay, the system comprising:
a signal evaluation unit (90) adapted for receiving response signals of the DUT (50) on an applied first laser signal at a first center wavelength modulated by a first modulation frequency and an applied second laser signal at a second center wavelength modulated by a second modulation frequency,
whereby
the signal evaluation unit (90) is adapted for:
serially receiving the response signals, whereof one applied signal is switched on while the other applied signal is switched off,
synchronizing a reference oscillator for maintaining an actually switched off response signal as reference phase, and
determining the characteristic of the optical property of the DUT (50) based on an analysis of the received response signals by determining a phase difference between an actually switched on response signal and the reference phase, only in conjunction with the parameter settings for the first center wavelength, the first modulation frequency, the second center wavelength, and the second modulation frequency.

3. The system (80, 90) of claim 1 or 2, wherein the first modulation frequency equals the second modulation frequency.

4. The system (80, 90) of daim 1 or any one of the above claims, further comprising a signal generation unit (80) having:
at least one laser device (10, 30, 20, 40) adapted for providing to the DUT (50) the first laser signal at the first center wavelength modulated by the first modulation frequency, and the second laser signal at the second center wavelength modulated by the second modulation frequency.

5. The system of claim 1 or any one of the above claims, wherein at least one of the first and second laser signals is intensity-modulated.

6. The system of claim 1, further being adapted for applying the first and second laser signal concurrently.

7. A method for determining a characteristic of an optical property of a device under test - DUT - (50), wherein the optical property is at least one of a group comprising chromatic dispersion and group delay, the method comprising the steps of:
(a) receiving a first response signal from the DUT (50) on an applied first laser signal at a first center wavelength modulated by a first modulation frequency and
(b) receiving a second response signal from the DUT (50) on an applied second laser signal at a second center wavelength modulated by a second modulation frequency,
whereby
(c) serially receiving the response signals, whereof one applied signal is switched on while the other applied signal is switched off, and
(d) determining the characteristic of the optical property of the DUT (50) by analyzing the serially received response signals by determining a phase jump between said response signals, only in conjunction with the parameter settings for the first center wavelength, the first modulation frequency, the second center wavelength, and the second modulation frequency.

8. A method for determining a characteristic of an optical property of a device under test - DUT - (50), wherein the optical property is at least one of a group comprising chromatic dispersion and group delay, the method comprising the steps of:
(a) receiving a first response signal from the DUT (50) on an applied first laser signal at a first center wavelength modulated by a first modulation frequency and
(b) receiving a second response signal from the DUT (50) on an applied second laser signal at a second center wavelength modulated by a second modulation frequency,
whereby
(c') serially receiving the response signals, whereof one applied signal is switched on while the other applied signal is switched off,
(d') synchronizing a reference oscillator for maintaining an actually switched off response signal as reference phase, and
(e') determining the characteristic of the optical property of the DUT (50) by analyzing the serially received response signals by determining a phase jump between an actually switched on response signal and the reference phase, only in conjunction with the parameter settings for the first center wavelength, the first modulation frequency, the second center wavelength, and the second modulation frequency.

9. The method of claims 7 or 8, further comprising prior to step (a), the steps of:
• providing to the DUT (50) the first laser signal at the first center wavelength modulated by the first modulation frequency, and
• providing to the DUT (50) the second laser signal at the second center wavelength modulated by the second modulation frequency.

## Patentansprüche

1. System (80, 90) zur Bestimmung einer Charakteristik einer optischen Eigenschaft eines zu testenden Einheit (Device Under Test, DUT) (50), wobei unter der optischen Eigenschaft mindestens eine der Eigenschaften chromatische Dispersion und Gruppenverzögerung zu verstehen ist und das System Folgendes aufweist:
eine Signalbewertungseinheit (90), die zum Empfangen von Antwortsignalen der DUT (50) auf ein erstes angelegtes Lasersignal hin bei einer ersten Mittenwellenlänge, das durch eine erste Modulationsfrequenz moduliert wurde, und auf ein zweites angelegtes Lasersignal bei einer zweiten Mittenwellenlänge, das durch eine zweite Modulationsfrequenz moduliert wurde, eingerichtet ist,
wobei die Signalbewertungseinheit (90) eingerichtet ist zum:
seriellen Empfangen der Antwortsignale, wovon ein angelegtes Signal eingeschaltet ist, während das andere angelegte Signal ausgeschaltet ist, und
Bestimmen der Charakteristik der optischen Eigenschaft der DUT (50) auf der Basis einer Analyse der seriell empfangenen Antwortsignale durch Ermittlung eines Phasensprungs zwischen den Antwortsignalen nur in Verbindung mit den Parametereinstellungen für die erste Mittenwellenlänge, die erste Modulationsfrequenz, die zweite Mittenwellenlänge und die zweite Modulationsfrequenz.

2. System (80, 90) zur Bestimmung einer Charakteristik einer optischen Eigenschaft einer zu testenden Einheit - DUT - (50), wobei unter der optischen Eigenschaft mindestens eine der Eigenschaften chromatische Dispersion und Gruppenverzögerung zu verstehen ist und das System Folgendes aufweist:
eine Signalbewertungseinheit (90), die zum Empfangen von Antwortsignalen der DUT (50) auf ein erstes angelegtes Lasersignal hin bei einer ersten Mittenwellenlänge, das durch eine erste Modulationsfrequenz moduliert wurde, und auf ein zweites angelegtes Lasersignal bei einer zweiten Mittenwellenlänge, das durch eine zweite Modulationsfrequenz moduliert wurde, eingerichtet ist,
wobei die Signalbewertungseinheit (90) eingerichtet ist zum:
seriellen Empfangen der Antwortsignale, wovon ein angelegtes Signal eingeschaltet ist, während das andere angelegte Signal ausgeschaltet ist,
Synchronisieren eines Referenzoszillators zum Aufrechterhalten eines aktuell ausgeschalteten Antwortsignals als Referenzphase, und
Ermitteln der Charakteristik der optischen Eigenschaft der DUT (50) auf der Basis einer Analyse der empfangenen Antwortsignale durch Ermittlung einer Phasendifferenz zwischen einem aktuell eingeschalteten Antwortsignal und der Referenzphase nur in Verbindung mit den Parametereinstellungen für die erste Mittenwellenlänge, die erste Modulationsfrequenz, die zweite Mittenwellenlänge und die zweite Modulationsfrequenz.

3. System (80, 90) nach Anspruch 1 oder 2, bei dem die erste Modulationsfrequenz gleich der zweiten Modulationsfrequenz ist.

4. System (80, 90) nach Anspruch 1 oder einem der obigen Ansprüche, wobei das System ferner eine Signalerzeugungseinheit (80) umfasst, die Folgendes aufweist:
mindestens eine Lasereinheit (10, 30, 20, 40), die so eingerichtet ist, dass sie der DUT (50) das erste Lasersignal bei der ersten Mittenwellenlänge, das durch die erste Modulationsfrequenz moduliert wurde, und das zweite Lasersignal bei der zweiten Mittenwellenlänge, das durch die zweite Modulationsfrequenz moduliert wurde, bereitstellt.

5. System nach Anspruch 1 oder einem der obigen Ansprüche, wobei mindestens eines von beiden, das erste oder das zweite Lasersignal, intensitätsmoduliert ist.

6. System nach Anspruch 1, das ferner so eingerichtet ist, dass das erste und das zweite Lasersignal gleichzeitig angelegt werden können.

7. Verfahren zur Bestimmung einer Charakteristik einer optischen Eigenschaft einer zu testenden Einheit - DUT - (50), wobei unter der optischen Eigenschaft mindestens eine der Eigenschaften chromatische Dispersion und Gruppenverzögerung zu verstehen ist und das Verfahren die folgenden Schritte aufweist:
(a) Empfangen eines ersten Antwortsignals von der DUT (50) auf ein erstes Lasersignal bei einer ersten Mittenwellenlänge, das durch eine erste Modulationsfrequenz moduliert wurde, und
(b) Empfangen eines zweiten Antwortsignals von der DUT (50) auf ein zweites Lasersignal bei einer zweiten Mittenwellenlänge, das durch eine zweite Modulationsfrequenz moduliert wurde,
wobei
(c) die Antwortsignale seriell empfangen werden, wovon ein angelegtes Signal eingeschaltet ist, während das andere angelegte Signal ausgeschaltet ist, und
(d) die Charakteristik der optischen Eigenschaft der DUT (50) durch Analysieren der seriell empfangenen Antwortsignale durch Ermittlung eines Phasensprungs zwischen den Antwortsignalen nur in Verbindung mit den Parametereinstellungen für die erste Mittenwellenlänge, die erste Modulationsfrequenz, die zweite Mittenwellenlänge und die zweite Modulationsfrequenz bestimmt wird.

8. Verfahren zur Bestimmung einer Charakteristik einer optischen Eigenschaft einer zu testenden Einheit - DUT - (50), wobei unter der optischen Eigenschaft mindestens eine der Eigenschaften chromatische Dispersion und Gruppenverzögerung zu verstehen ist und das Verfahren die folgenden Schritte aufweist:
(a) Empfangen eines ersten Antwortsignals von der DUT (50) auf ein erstes Lasersignal bei einer ersten Mittenwellenlänge, das durch eine erste Modulationsfrequenz moduliert wurde, und
(b) Empfangen eines zweiten Antwortsignals von der DUT (50) auf ein zweites Lasersignal bei einer zweiten Mittenwellenlänge, das durch eine zweite Modulationsfrequenz moduliert wurde,
wobei
(c') die Antwortsignale seriell empfangen werden, wovon ein angelegtes Signal eingeschaltet ist, während das andere angelegte Signal ausgeschaltet ist,
(d') ein Referenzoszillator zum Aufrechterhalten eines aktuell ausgeschalteten Antwortsignals als Referenzphase synchronisiert wird, und
(e') die Charakteristik der optischen Eigenschaft der DUT (50) durch Analysieren der seriell empfangenen Antwortsignale durch Ermittlung eines Phasensprungs zwischen den Antwortsignalen nur in Verbindung mit den Parametereinstellungen für die erste Mittenwellenlänge, die erste Modulationsfrequenz, die zweite Mittenwellenlänge und die zweite Modulationsfrequenz bestimmt wird.

9. Verfahren nach Anspruch 7 oder 8, das vor dem Schritt (a) ferner die folgenden Schritte aufweist:
• Eingeben des ersten Lasersignals bei der ersten Mittenwellenlänge, das durch die erste Modulationsfrequenz moduliert wurde, in die DUT (50), und
• Eingeben des zweiten Lasersignals bei der zweiten Mittenwellenlänge, das durch die zweite Modulationsfrequenz moduliert wurde, in die DUT (50).

## Revendications

1. Système (80, 90) pour déterminer une caractéristique d'une propriété optique d'un DUT (Device Under Test/dispositif en essai) (50), dans lequel la propriété optique est au moins une propriété choisie parmi un groupe comprenant la dispersion chromatique et le temps de propagation de groupe, le système comprenant :
une unité d'évaluation de signal (90) à même de recevoir des signaux de réponse du DUT (50) sur un premier signal laser appliqué à une première longueur d'onde centrale modulé par une première fréquence de modulation et un deuxième signal laser appliqué à une deuxième longueur d'onde centrale modulé par une deuxième fréquence de modulation ;
par lequel
l'unité d'évaluation de signal (90) est à même de :
recevoir en série les signaux de réponse, dont un signal appliqué est débloqué tandis que l'autre signal appliqué est bloqué, et
déterminer la caractéristique de la propriété optique du DUT (50) sur la base d'une analyse des signaux de réponse reçus en série en déterminant un saut de phase entre lesdits signaux de réponse, uniquement en conjonction avec les réglages paramétriques pour la première longueur d'onde centrale, la première fréquence de modulation, la deuxième longueur d'onde centrale et la deuxième fréquence de modulation.

2. Système (80, 90) pour déterminer une caractéristique d'une propriété optique d'un DUT (50), dans lequel la propriété optique est au moins une propriété choisie parmi un groupe comprenant la dispersion chromatique et le temps de propagation de groupe, le système comprenant :
une unité d'évaluation de signal (90) à même de recevoir des signaux de réponse du DUT (50) sur un premier signal laser appliqué à une première longueur d'onde centrale modulé par une première fréquence de modulation et
un deuxième signal laser appliqué à une deuxième longueur d'onde centrale modulé par une deuxième fréquence de modulation ;
par lequel
l'unité d'évaluation de signal (90) est à même de :
recevoir en série les signaux de réponse, dont un signal appliqué est débloqué tandis que l'autre signal appliqué est bloqué ;
synchroniser un oscillateur de référence pour maintenir un signal de réponse bloqué à cet instant comme phase de référence, et
déterminer la caractéristique de la propriété optique du DUT (50) sur la base d'une analyse des signaux de réponse reçus en déterminant une différence de phase entre un signal de réponse débloqué à cet instant et la phase de référence, uniquement en conjonction avec les réglages paramétriques pour la première longueur d'onde centrale, la première fréquence de modulation, la deuxième longueur d'onde centrale et la deuxième fréquence de modulation.

3. Système (80, 90) suivant la revendication 1 ou 2, dans lequel la première fréquence de modulation est égale à la deuxième fréquence de modulation.

4. Système (80, 90) suivant la revendication 1 ou suivant l'une quelconque des revendications précédentes, comprenant en outre une unité de génération de signal (80) comportant :
au moins un dispositif laser (10, 30, 20, 40) à même de fournir au DUT (50) le premier signal laser à la première longueur d'onde centrale modulé par la première fréquence de modulation, et le deuxième signal laser à la deuxième longueur d'onde centrale modulé par la deuxième fréquence de modulation.

5. Système suivant la revendication 1 ou suivant l'une quelconque des revendications précédentes, dans lequel au moins un des premier et deuxième signaux laser est modulé en intensité.

6. Système suivant la revendication 1, étant en outre à même d'appliquer simultanément le premier signal laser et le deuxième signal laser.

7. Procédé pour déterminer une caractéristique d'une propriété optique d'un DUT (50), dans lequel la propriété optique est au moins une propriété choisie parmi un groupe comprenant la dispersion chromatique et le temps de propagation de groupe, le procédé comprenant les étapes suivantes :
(a) la réception d'un premier signal de réponse venant du DUT (50) sur un premier signal laser appliqué à une première longueur d'onde centrale modulé par une première fréquence de modulation, et
(b) la réception d'un deuxième signal de réponse venant du DUT (50) sur un deuxième signal laser appliqué à une deuxième longueur d'onde centrale modulé par une deuxième fréquence de modulation ;
par lequel
(c) la réception en série des signaux de réponse, dont un signal appliqué est débloqué tandis que l'autre signal appliqué est bloqué, et
(d) la détermination de la caractéristique de la propriété optique du DUT (50) en analysant les signaux de réponse reçus en série en déterminant un saut de phase entre lesdits signaux de réponse, uniquement en conjonction avec les réglages paramétriques pour la première longueur d'onde centrale, la première fréquence de modulation, la deuxième longueur d'onde centrale et la deuxième fréquence de modulation.

8. Procédé pour déterminer une caractéristique d'une propriété optique d'un DUT (50), dans lequel la propriété optique est au moins une propriété choisie parmi un groupe comprenant la dispersion chromatique et le temps de propagation de groupe, le procédé comprenant les étapes suivantes :
(a) la réception d'un premier signal de réponse venant du DUT (50) sur un premier signal laser appliqué à une première longueur d'onde centrale modulé par une première fréquence de modulation, et
(b) la réception d'un deuxième signal de réponse venant du DUT (50) sur un deuxième signal laser appliqué à une deuxième longueur d'onde centrale modulé par une deuxième fréquence de modulation ;
par lequel
(c') la réception en série des signaux de réponse, dont un signal appliqué est débloqué tandis que l'autre signal appliqué est bloqué ;
(d') la synchronisation d'un oscillateur de référence pour maintenir un signal de réponse bloqué à cet instant comme phase de référence, et
(e') la détermination de la caractéristique de la propriété optique du DUT (50) en analysant les signaux de réponse reçus en série en déterminant un saut de phase entre un signal de réponse débloqué à cet instant et la phase de référence, uniquement en conjonction avec les réglages paramétriques pour la première longueur d'onde centrale, la première fréquence de modulation, la deuxième longueur d'onde centrale et la deuxième fréquence de modulation.

9. Procédé suivant la revendication 7 ou 8, comprenant en outre, avant l'étape (a), les étapes suivantes :
• la fourniture au DUT (50) du premier signal laser à la première longueur d'onde centrale modulé par la première fréquence de modulation, et
• la fourniture au DUT (50) du deuxième signal laser à la deuxième longueur d'onde centrale modulé par la deuxième fréquence de modulation.
